# EUROPEAN PATENT SPECIFICATION

(11) **EP 3 117 588 B1**
(45) Date of publication and mention of the grant of the patent: **15.12.2021**
(21) Application number: 15762023.8
(22) Date of filing: 06.03.2015
(51) Int. Cl.: H04L 29/12, H04L 29/10

(54) **SCALABLE ADDRESS RESOLUTION**
SKALIERBARE ADRESSENAUFLÖSUNG
RÉSOLUTION D'ADRESSE ÉVOLUTIVE

(30) Priority: 14.03.2014 US 201414214183
(43) Date of publication of application: 18.01.2017
(73) Proprietor: Intel Corporation, Santa Clara, CA 95054 (US)
(72) Inventor: RIMMER, Todd, Exton, Pennsylvania 19341 (US); WEINY, Ira, Livermore, California 94550 (US); FLECK, John, Doylestown, Pennsylvania 18902 (US); WAN, Kaike, Doylestown, Pennsylvania 18902 (US); HEFTY, Mark, Aloha, Oregon 97007 (US)
(74) Representative: Rummler, Felix
(86) International application number: PCT/US2015/019241
(87) International publication number: WO 2015/138250

(56) References cited:
- US-A1- 2008 225 871
- US-A1- 2011 268 117
- US-A1- 2011 268 117
- US-A1- 2012 311 123
- US-A1- 2013 124 910
- US-B1- 8 260 893
- CHU SUN MICROSYSTEMS V KASHYAP IBM J: "Transmission of IP over InfiniBand (IPoIB); rfc4391.txt", NETWORK WORKING GROUP RFC 1717, INTERNET SOCIETY (ISOC) 4, RUE DES FALAISES CH- 1205 GENEVA, SWITZERLAND, CH, 1 April 2006 (2006-04-01), XP015054957, ISSN: 0000-0003
- BOGDANSKI BARTOSZ ET AL: "Making the Network Scalable: Inter-subnet Routing in InfiniBand", 26 August 2013 (2013-08-26), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 685 - 698, XP047036861, ISSN: 0302-9743 ISBN: 978-3-642-16019-6 * the whole document *
- None

## Description

### FIELD

The present disclosure relates to scalable address resolution for a switched fabric network.

### BACKGROUND

Name and path resolution in switched fabric networks, such as Infiniband^{™} (IB) networks, have been problematic. Scalable solutions do not exist, and various work-arounds to address the limitations associated with a subnet administrator have resulted in failed or decreased performance (e.g., fabric deadlock in complex fabric topologies). Some current solutions for name and path resolution include hard coding values for all variables except the remote local identifier (LID), "standard" methodologies as may be found in the Infiniband^{™} network standard, and RDMA IP CM that uses internet protocol over IB (IPoIB) addressing assigned to IB to resolve and establish connections. These solutions are ill-suited to provide high-speed scalability, performance and fault tolerance for switched fabric networks like Infiniband^{™} networks.

US 2011/0268117 A1 relates to a method and device for local are network (LAN) emulation over an Infiniband (IB) fabric. An IB LAN driver at a first node on an IB fabric receives the port and associated local identifier (LID) of one or more remote peer nodes on the IB fabric. An IEEE 802.3 Ethernet MAC address with one LID imbedded is generated. The imbedded LID is for one or more remote peer nodes. The IB LAN driver sends the Ethernet MAC address to an Address Resolution Protocol (ARP). A logical address of a remote peer node is generated by a network protocol. The logical address is mapped to an Ethernet MAC address. The IB LAN driver sends the Ethernet MAC address onto the IB fabric to the one or more remote peer nodes. The remote peer nodes appear to reside on an Ethernet network to the network protocol.

### BRIEF DESCRIPTION OF DRAWINGS

The invention is defined by the independent claims. Further embodiments of the invention are defined by the dependent claims. Features and advantages of the claimed subject matter will be apparent from the following detailed description of embodiments consistent therewith, which description should be considered with reference to the accompanying drawings, wherein:
FIG. 1 illustrates a network system consistent with various embodiments of the present disclosure;
FIG. 2 illustrates an example address resolution request message according to one embodiment of the present disclosure;
FIG. 3 illustrates an example address resolution response message according to one embodiment of the present disclosure;
FIG. 4 illustrates another example message according to one embodiment of the present disclosure; and
FIG. 5 is a flowchart of operations according to one embodiment of the present disclosure.

Although the following Detailed Description will proceed with reference being made to illustrative embodiments, many alternatives, modifications, and variations thereof will be apparent to those skilled in the art.

### DETAILED DESCRIPTION

Generally, this disclosure relates to efficient, scalable address resolution system for a network. A network node includes a subnet administrator (SA) proxy logic that includes provider logic that contains specific fabric information (e.g., path record information, etc.) regarding a specific network and/or subnet in communication with the network node. The at least one provider logic provides local address resolution, instead of requiring applications to continuously or periodically communicate with the network and/or subnet to resolve addresses. A provider interface is provided that is configured to receive address resolution requests from one or more applications, determine an appropriate provider logic, among a plurality of provider logics, to resolve the requested address, and return the resolved address to the application to enable the application to route a packet through a subnet/network to a destination. The resolved address may take the form of path record information, which may provide local port information, destination address information and path information (e.g., MTU, service level, partition, etc.) regarding the hops in the network/subnet fabric. The provider interface, among other things, enables applications, running on the node, to request address resolution without requiring the applications to be configured with specific fabric protocols thus enabling address resolution transparency for a wide range of applications. Each provider logic may be generated, for example, by fabric managers, subnet managers, etc. and/or may be generated using preset knowledge of the network/subnet fabric. In some embodiments, the provider logics and provider interface may be accessed by users in kernel (OS) space to enable address resolution, for example, for I/O transactions and applications, Ethernet over Infiniband^{™} (IP over IB) applications, privileged OS user applications, etc.

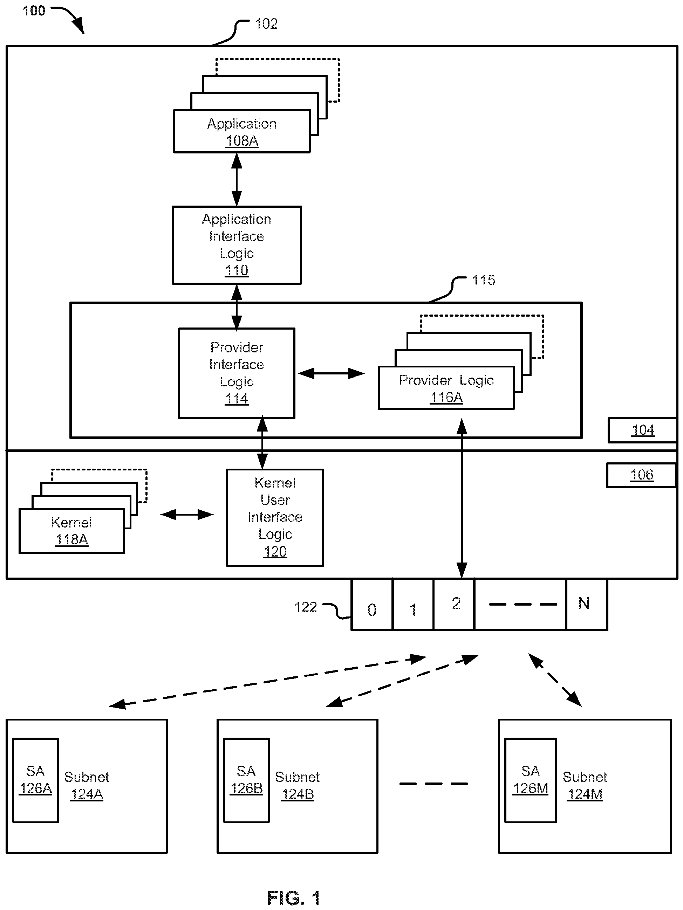

FIG. 1 illustrates a network system 100 consistent with various embodiments of the present disclosure. Network system 100 generally includes at least one network node element 102 (hereinafter "node") in communication with at least one network/subnet network system 124A, 124B,..., 124M (hereinafter "subnet"). The node 102 and the subnet 124A, 124B,..., 124M may communicate with each other using a switched fabric communications protocol, for example, an Ethernet communications protocol, Infiniband communications protocol, proprietary switched fabric communications protocol, etc. The Ethernet communications protocol may be capable of providing communication using a Transmission Control Protocol/Internet Protocol (TCP/IP). The Ethernet protocol may comply or be compatible with the Ethernet standard published by the Institute of Electrical and Electronics Engineers (IEEE) titled "IEEE 802.3 Standard", published in March, 2002 and/or later versions of this standard, for example, the IEEE 802.3 Standard for Ethernet, published 2012. The Infiniband protocol may comply or be compatible with the Infiniband specification published by the InfiniBand Trade Association (IBTA), titled "InfiniBand^{™} Architecture Specification", Volume 1, Release 1.2.1, published June 2001 and/or later versions of this specification, for example, InfiniBand^{™} Architecture, Volume 1 (General Specification), Release 1.2.1, published January 2008 and Volume 2 (Physical Specification), Release 1.3, published November 2012. Of course, in other embodiments, the switched fabric communications protocol may include a custom and/or proprietary switched fabric communications protocol and/or other communication protocol.

The node 102 may represent a computer node element (e.g., host server system), switch, router, hub, network storage device, chassis, server, data center, network attached device, non-volatile memory (NVM) storage device, cloud-based server and/or storage system, etc. The system 100 may be configured for high-performance computing (HPC) applications, for example, large-scale storage networks (e.g., cloud computing, etc.) and/or other configurations. Although not shown in FIG. 1, the node 102 may include circuits and/or systems that may be present in a computer node element for these purposes, and may include, for example, a system processor (e.g., multi-core general purpose processor, such as those provided by Intel Corp., etc.) and system memory. The logics and/or interfaces described herein may include executable instructions stored in system memory and executed by processor circuitry, such as the system processor.

In some embodiments, the node 102 may be logically and/or physically partitioned into a user space region 104 (e.g., application space) and a kernel region 106. Generally, the user space region 106 may include one or more applications that are typically executed "outside" of an operating system (OS) kernel, and the kernel region may include one or more applications (kernel users) that are typically executed as part of an OS kernel.

The user space region 104 may include one or more applications, one of which is designated in FIG. 1 as application 108A. Application 108A is provided as an example throughout this disclosure, and unless stated to the contrary, the address resolution operations of the application 108A is representative of how the group of applications may operate. The one or more applications may include, for example, message passing interface (MPI) applications, library caching applications providing communication protocols among massively parallel applications, performance scaled messaging (PSM) applications, scalable fabric interface (SFI) applications, internet/networking applications (e.g., RDMA-protocol applications), custom and/or off-the-shelf applications which may be used for a particular operating environment, etc. In general, application 108A is configured to generate packets to be sent to one or more subnets 124A, 124B,..., 124M. The node 102 may also include at least one network controller 122 (e.g., network interface card (NIC)). The network controller 122 may include a plurality of ports 0, 1, 2, ..., N. Each port may be used by one or more applications and/or one or more subnets 124A, 124B,..., 124M to provide physical coupling between the node 102 and the subnets 124A, 124B,..., 124M. The structural and operational features of the ports may be defined by the aforementioned Infiniband communications protocol, and/or defined by a custom and/or proprietary communications protocol.

Each subnet 124A, 124B,..., 124M represents a fabric topology of interconnected network nodes. Each subnet 124A, 124B,..., 124M may include a respective subnet administration logic SA 126A, 126B,..., 126M that is generally operable to configure the network fabric (which may include, for example, device/node element discovery, determination of device/node element capabilities and configuration, etc.), assign addresses to nodes and/or nodes and network controllers, program node switch elements to provide paths between node elements. The subnet administration (SA) logic 126A, 126B,..., 126M is also configured to generate SA data, and the SA data generally includes address and path information for the network node elements within a respective subnet 124A, 124B,..., 124M and/or external address and path information (e.g., DNS information, TCP/IP network information, etc.).

In order to transmit packets to one or more subnets, the application 108A may generate an address resolution request to enable the application 108A to route packets through the fabric of an identified subnet 124A, 124B,..., 124M. "Address resolution", as used herein, is generally defined as sufficient address information to enable an application to appropriately route one or more packets through at least one subnet 124A, 124B,..., 124M to at least one destination node. The address resolution request, generated by the application 108A, may include, for example, a function call that may conform to a standardized format (e.g., Infiniband function call format, etc.), thus enabling support for a wide variety of current and/or future applications, and also thus providing address resolution without requiring an application to provide specific knowledge of fabric topology, etc. The address resolution request generated by the application 108A may include incomplete or inaccurate address information for a destination node. For example, the application 108A may generate an address resolution request that includes destination name (e.g. character string representative of a port, "hostname", network label, etc.), IP address, IPv6 address, source address data, destination address data, and/or other address information. In other examples, the application 108A may generate an address resolution request that includes path record data which provides "hints" as to how an address should be resolved. Such "hints" may include, for example, particular path or paths through a fabric, paths over a particular partition of a fabric, utilizing a particular MTU, specific service ID, etc. The address information from the application is typically insufficient to properly route packets to a destination node through a subnet. To enable the application 108A to properly route packets to a destination node, the address resolution may include path record information and port information. "Path record", as used herein includes information that relates a source node to a destination node, for example, local identifier (LID) information, global identifier (GID) information, etc., and may also include fabric-specific information regarding one or more hops in a fabric. Such fabric-specific information may include, for example, maximum transmission unit (MTU), service level information, partition information, etc. The port information may be an identifier to a specific port 0, 1, 2, ..., N.

Accordingly, node 102 also includes an SA proxy logic 115 generally configured to receive an address resolution request from the application 108A and return path record information and/or port information to the application 108A to enable the application 108A to route one or more packets to a destination node (or nodes) through at least one designated subnet 124A, 124B,..., 124M. The SA proxy logic 115 is configured to determine, based on an address resolution request from an application 108A, a physical port to connect to a subnet (local port resolution), resolving a destination address, for example, LID or GID information, and obtaining path record information associated with a destination subnet. The SA proxy logic 115 may include a provider interface logic 114 and at least one provider logic, one of which is designated in FIG. 1 as provider logic 116A.

The provider logic 116A generally include fabric-specific path record information related to at least one subnet 124A, 124B,..., 124M. In some embodiments, each provider logic 116A is specific to a subnet 124A, 124B,..., or 124M, while in other embodiments a provider logic may include fabric-specific path record information for a plurality of subnets. In some embodiments, each port 0, 1, 2, ..., N of each network controller 122 may be assigned at least one provider logic 116A. In one example, a provider logic 116A may be configured to, upon an address resolution request from an application 108A, query an associated SA logic 126A, 126B,..., or 126M to retrieve current path record information related to a selected subnet 124A, 124B,..., 124M. In another example, a provider logic 116A may be configured to periodically communicate with an associated SA logic 126A, 126B,..., or 126M and cache the path record information for the associated subnet 126A, 126B,..., 126M. In another example, a provider logic 116A may include "static" path record information for an associated subnet 124A, 124B,..., 124M, for example, in a case where the associated subnet is hardwired, relatively unchanging, etc. A provider logic 116A may be individually tailored with path record information for an associated subnet and may generated by, for example, a subnet designer, subnet manager, etc. In other embodiments, a provider logic 116A may include default and/or standardized path record information that may apply to a variety of specific and/or generalized subnets. Each provider logic 116A may also be configured for in-band or out-of-band (OOB) communication with an associated SA logic 126A, 126B,..., 126M to enable, for example, address resolution in the event that an address resolution request cannot be fulfilled locally by the provider logic 116A. The provider logic 116A, in addition to path record information, may include local identifier (LID) information, IP address information, hostname information, etc. The collection of provider logic of the SA proxy logic 115 enable, for example, local address resolution for a plurality of applications of the node 102.

The provider interface logic 114 is configured to exchange commands and data between the application 108A (and/or or the application interface 110, described below) and the provider logic 116A. The provider interface logic 114 is also configured to receive an address resolution request from an application 108A. The provider interface logic 114 is also configured to determine, based on, for example, source address information of the address resolution request, at least one subnet and at least one associated provider logic 116A that includes the path record information that is responsive to the request from the application 108A. The application interface logic 114 is also configured to parse the path record information contained in a provider logic 116A to generate a response to the requesting application 108A, where the response includes the requested path record information. The application interface may also be configured to determine, based on the address resolution request, a network controller 122 and at least one port 0, 1, 2, ..., N that may be used by the requesting application 108A to communicate with an identified subnet 124A, 124B,..., 124M. Network controllers 122 and/or ports 0, 1, 2, ..., N may be dynamically added or removed from the node 102. The provider interface 114 may also be configured to monitor such changes and assign/reassign provider logic with network controller(s) 112 and/or port(s) 0, 1, 2, ..., N. The provider interface logic 114 may also include information related to local nodes addressing. For example, the node 102 may enable port naming strategies, and the network interface logic may be configured to update provider logic 116A with local nodes addressing information to enable remote nodes to resolve local nodes (potentially without the involvement of the SA logic).

The node 102 may also include an application interface 110 that is generally configured to interface with the application 108A and an SA proxy logic 115, and generate and translate messages from the application 108A and the SA proxy module 115. The application interface 110 is generally configured to enable the application 108A to communicate specific requests of the SA proxy logic 115, using, in some embodiments, a standardized API (application programming interface) thus enabling a wide variety of fabric-specific SA logic implementations to be utilized without the application having specific knowledge of those SA logic implementations. The application interface 110 may utilize an inter-process execution (e.g., Unix socket) to communicate between the application 108A and the SA proxy logic 115. The application interface is configured to receive an address resolution request from an application 108A and format the request into a message format that is utilized by the SA proxy logic 115. Similarly, the application interface logic 110 is configured to format resolved address information for the application 108A when an address resolution response message is received from the SA proxy logic 115.

In some embodiments, one or more applications (kernel users) in the kernel space 106 may generate an address resolution request to the SA proxy logic 115. To that end, the kernel space 106 of node 102 may include a plurality of kernel (OS) users 118A. The kernel users 118A may include, for example, I/O transactions and applications, Ethernet over Infiniband^{™} (IP over IB) applications, privileged OS user applications, SCSI RDMA applications, I/O applications (e.g., Luster file system applications, etc.), SRP applications, etc.

Each kernel user 118A may generate an address resolution request, similar to the address resolution request generated by the at least one application 108A, described above. The kernel space 106 may also include a kernel user interface logic 120 generally configured to exchange commands and data between at least one kernel user 108A and the provider interface logic 114. The kernel user interface logic 120 is also configured to receive an address resolution request from a kernel user 108A and format the request message to enable the provider interface logic 114 to respond to the request to provide resolved address information, as described above. The kernel user interface logic 120 is also configured to receive a response (i.e., resolved address) from the provider interface logic 114 and format the response into a format accessible by a kernel user 108A. The interface logic 120 may comply with a kernel communication channel protocol, for example, a Netlink interface compliant protocol, etc. Thus, applications in both user space 104 and kernel space 106 may advantageously be enabled for local address resolution by node 102. In some embodiments, the kernel user interface logic 120 may determine the availability of the provider interface logic 114. If the provider interface logic 114 is unavailable, the kernel user interface logic 120 may be configured to communicate with one or more SA logic 126A, 126B,..., 126M to provide address resolution for one or more kernel users 118A.

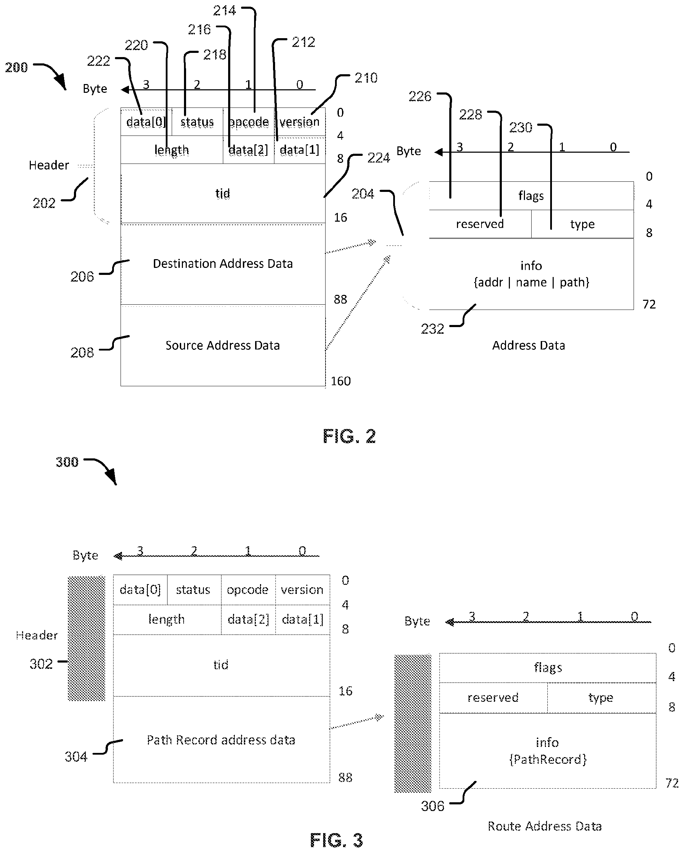

FIG. 2 illustrates an example address resolution request message 200 according to one embodiment of the present disclosure. The address resolution request message 200 may be a message format that is compatible, or complies with, the aforementioned Infiniband^{™} communications protocol. With continued reference to FIG. 1, the address resolution request message 200 may be generated by the application interface logic 110 and transmitted to the provider interface logic 114, in response to an address resolution request from an application 108A. The address resolution request message 200 generally includes a header portion 202 and a partial address data portion 204. The header portion 202 may include a version field 210 indicative of the protocol version of the message 200, an opcode field 214 indicative of the type of operation performed (e.g., address resolution, performance query, etc.), a status field 218 indicative of the status of the message 200 (and may be used by the response message, described below), data fields 222, 216 and 212 which may be utilized for performance query messaging, and a transaction ID (TID) field 224 indicative of a transaction identifier and/or transaction sequence. The partial address data portion 204 may include, for example, destination address information 206 and/or source address data information 208. The partial address data portion 204 is shown in greater detail on the right portion of FIG. 2, and may generally include a flags field 226 indicative of source and/or destinations information, a type field 230 indicative of the type of address information that may be supplied by the application 108A (e.g., name, IP address IPv6 address, path record, service ID, etc.), a reserved field 226 that may be utilized in subsequent versions of a given protocol, and an info field 232 that generally includes the data of the address type supplied by the application 108A, and as described above, this data is typically a partial address that is to be resolved. The example byte count (horizontal axis) and bit count (vertical axis) of the request message 200 are depicted in FIG. 2. The address resolution request message 200 may be forwarded to the provider interface logic 114. In response, and as described above, the provider interface logic 114 may parse the message 200 to determine which provider logic 108A, among the plurality of providers, to utilize to resolve the address contained in the message 200. Of course, the address resolution request message 200 of FIG. 2 is only provided as an example. In other embodiments, the address resolution request message may be compatible with other communication protocols, for example, Ethernet communication protocols, custom and/or proprietary communication protocols, etc.

FIG. 3 illustrates an example address resolution response message 300 according to one embodiment of the present disclosure. The address resolution response message 300 may be a message format that is compatible, or complies with, the aforementioned Infiniband^{™} communications protocol. With continued reference to FIG. 1 and FIG. 2, the address resolution response message 300 may be generated by the provider interface logic 114, in response to an address resolution request message from the application interface logic 110. The address resolution response message 300 generally includes a header portion 302 and a resolved address data portion 304 (e.g., route address data). The header portion 302 may include the fields described above with reference to header 202 of FIG. 2. The resolved address data portion 304 may include, for example, route address data (e.g., path record information), etc., and/or other information that operates to resolve the address requested by the application 108A. The resolved address data portion 304 is shown in greater detail on the right portion of FIG. 3, and may generally include the fields described above with reference to the partial address data portion 204 header 202 of FIG. 2, and may also include completed (resolved path record information in the info field 306. The resolved address of the info field 306 is described above with reference to the provider interface logic 114 and provider logic 116A. The example byte count (horizontal axis) and bit count (vertical axis) of the response message 300 are depicted in FIG. 3. The address resolution response message 300 may be forwarded to the application interface 114, and in turn, the resolved address data may be forwarded to the requesting application 108A, thus enabling the application 108A to correctly route packets to a destination through a determined subnet. Of course, the address resolution response message 300 of FIG. 3 is only provided as an example. In other embodiments, the address resolution response message may be compatible with other communication protocols, for example, Ethernet communication protocols, custom and/or proprietary communication protocols, etc.

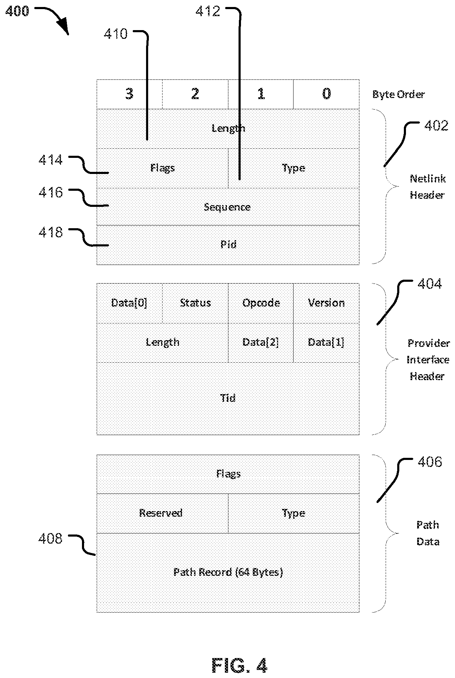

FIG. 4 illustrates another example message 400 according to one embodiment of the present disclosure. The format of message 400 may be used as both an address resolution request message and an address resolution response message. The message 400 may be a message format that is compatible, or complies with, the aforementioned Infiniband^{™} communications protocol and/or a Netlink communications protocol. With continued reference to FIG. 1, the message 400 may be generated as an address resolution request message by the kernel user interface 120 in response to an address resolution request from a kernel user 118A, and the message 400 may be generated as an address resolution response message by the provider interface 114, that provides resolved address information. The message 400 generally includes a Netlink header portion 402 configured to route Netlink messages between Netlink applications (users) of the system 100 (e.g., broadcasting among registers Netlink applications), and to enable an OS to "steer" the message 400 to and from the kernel user interface logic 120 and the provider interface logic 114. The message 400 also includes a provider interface header portion 404 similar to the header 202/302 of FIGS. 2/3. The message 400 also includes a path data portion 406, similar to partial/resolved address data portions 204/304 of FIGS. 2/3, and includes the partial path record information (in a request message) or the resolved path record information (in a response message) 408. The Netlink header portion 402 may include a length field 410 indicative of the length (e.g., bytes) of the message 400, a type field 412 indicative of the protocol-specific message content, flag field 414 indicative of a message type (e.g., request, response, ACK, etc.), sequence field 416 which may define a unique number so that requests are matched with responses, and a process ID (PID) field 418 indicative of the entity initiating the message (e.g., kernel users may be assigned a "0", other users may be assigned a "1", etc.). The path record field 408 may include partial or complete path record information. For example, if message 400 is used as an address resolution request message, the path record field 408 may be partially populated with address data from the kernel user 118A, as described herein. If the message 400 is used as an address resolution response message, the path record field 408 may be generated by the SA proxy logic 115 to include resolved address information to enable a kernel user to route packets through a selected subnet. The example byte count (horizontal axis) and bit count (vertical axis) of the response message 400 are depicted in FIG. 4. Of course, the message format 400 of FIG. 4 is only provided as an example. In other embodiments, the address resolution response message may be compatible with other communication protocols, for example, Ethernet communication protocols, custom and/or proprietary communication protocols, etc.

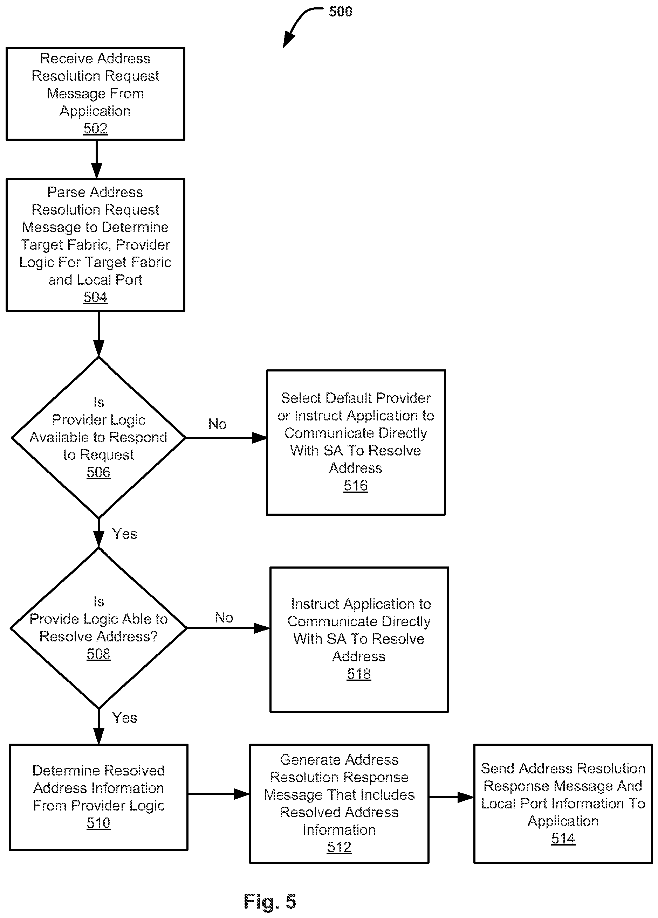

FIG. 5 is a flowchart 500 of operations according to another embodiment of the present disclosure. In particular, the flowchart 500 illustrates operations of SA proxy logic of a network node element to provide address resolution for applications (user space applications and/or kernel applications). Operations of this embodiment include receiving an address resolution request message 502. The address resolution request message may include incomplete and/or inaccurate address information that needs to be resolved to enable applications and/or kernel users to route packets through a determined subnet to a destination node. Operations also include parsing the address resolution request message and determining a target fabric to which the message applies, determining a provider logic for the target fabric and a local port associated with the provider logic 504. Operations also include determining if the selected provider logic is available to respond to the request 506 (e.g., determining if the provider logic is off-line or otherwise unavailable). If the provider logic is available to respond to the request, operations may include selecting a default provider logic or instructing the requester to communicate with a subnet administrator (SA) associated with the target subnet to obtain address resolution information 516. The default provider logic may contain sufficient information regarding the subnet to provide the requested address resolution. If the provider logic is available to respond to the request (506), operations may also include determining if the provider logic is able to resolve the address 508. If the provider logic is unable to resolve the address, for example, because the provider logic has insufficient address information, the subnet has changed, etc., operations may also include instructing the requester to communicate with a (SA) associated with the target subnet to obtain address resolution information 518. If the provider logic is able to resolve the address (508), operations may also include determining a resolved address from the provider logic 510 and generating an address resolution response message that includes the resolved address information 512. Operations may also include sending the address resolution response message and the local port information to the requester 514. The address resolution response message may include path record information associated with the identified subnet. In this embodiment, the requester includes at least one application associated with the node and/or kernel users associated with a kernel space of the node.

While the flowchart of FIG. 5 illustrates operations according various embodiments, it is to be understood that not all of the operations depicted in FIG. 5 are necessary for other embodiments. In addition, it is fully contemplated herein that in other embodiments of the present disclosure, the operations depicted in FIG. 5 and/or other operations described herein may be combined in a manner not specifically shown in any of the drawings, and such embodiments may include less or more operations than are illustrated in FIG. 5. Thus, claims directed to features and/or operations that are not exactly shown in one drawing are deemed within the scope and content of the present disclosure.

The foregoing is prided as exemplary system architectures and methodologies, modifications to the present disclosure are possible. For example, node 102 may further include an operating system (OS, not shown) to manage system resources and control tasks that are run on, e.g., node 102. For example, the OS may be implemented using Microsoft Windows, HP-UX, Linux, or UNIX, although other operating systems may be used. In some embodiments, the OS may be replaced by a virtual machine which may provide a layer of abstraction for underlying hardware to various operating systems running on one or more processing units. The operating system and/or virtual machine may implement one or more protocol stacks. A protocol stack may execute one or more programs to process packets. An example of a protocol stack is a TCP/IP (Transport Control Protocol/Internet Protocol) protocol stack comprising one or more programs for handling (e.g., processing or generating) packets to transmit and/or receive over a network. A protocol stack may alternatively be comprised on a dedicated sub-system such as, for example, a TCP offload engine and/or network controller 122.

System memory and/or memory associated with the network controller, e.g., network controller 122 may comprise one or more of the following types of memory: semiconductor firmware memory, programmable memory, non-volatile memory, read only memory, electrically programmable memory, random access memory, flash memory, magnetic disk memory, and/or optical disk memory. Either additionally or alternatively system memory and/or memory associated with network controller 122 may comprise other and/or later-developed types of computer-readable memory.

Embodiments of the operations described herein may be implemented in a system that includes one or more storage devices having stored thereon, individually or in combination, instructions that when executed by one or more processors perform the methods. The processor may include, for example, a processing unit and/or programmable circuitry in the network controller 122 and/or the system processor and/or other processing unit or programmable circuitry. Thus, it is intended that operations according to the methods described herein may be distributed across a plurality of physical devices, such as processing structures at several different physical locations. The storage device may include any type of tangible, non-transitory storage device, for example, any type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic and static RAMs, erasable programmable read-only memories (EPROMs), electrically erasable programmable read-only memories (EEPROMs), flash memories, magnetic or optical cards, or any type of storage media suitable for electronically, chemically and/or mechanically storing instructions.

The network system 100 of FIG. 1 may be configured to communicate using and RDMA-capable network, such as the Infiniband^{™} network communications protocol. In other embodiments, other RDMA-capable network protocols may be used, for example an iWARP communications protocol. The iWARP communications protocol may comply or be compatible with the iWARP standard developed by the RDMA Consortium and maintained and published by the Internet Engineering Task Force (IETF), titled "RDMA over Transmission Control Protocol (TCP) standard", published in 2007 and/or later versions of this standard.

In some embodiments, a hardware description language may be used to specify circuit and/or logic implementation(s) for the various modules and/or circuitry described herein. For example, in one embodiment the hardware description language may comply or be compatible with a very high speed integrated circuits (VHSIC) hardware description language (VHDL) that may enable semiconductor fabrication of one or more circuits and/or modules described herein. The VHDL may comply or be compatible with IEEE Standard 1076-1987, IEEE Standard 1076.2, IEEE1076.1, IEEE Draft 3.0 of VHDL-2006, IEEE Draft 4.0 of VHDL-2008 and/or other versions of the IEEE VHDL standards and/or other hardware description standards.

"Logic", as used herein, may comprise, singly or in any combination circuitry, code, instructions sets (e.g., embodied as software, firmware, etc.) that are configured for the stated functions. "Circuitry", as used in any embodiment herein, may comprise, for example, singly or in any combination, hardwired circuitry, programmable circuitry, state machine circuitry, processing circuitry, and/or firmware that stores instructions executed by programmable circuitry.

Accordingly, the present disclosure provides an example network node element that includes a network controller to communicate with at least one subnet using a switched fabric communications protocol, the network controller includes at least one local port; provider logic that includes path record information of an associated subnet; and provider interface logic to receive an address resolution request from the at least one application that includes partial address information. The provider interface logic is also to determine at least one local port to enable packet routing associated with the address resolution request. The provider logic is also to determine at least one subnet associated with the address resolution request. The provider interface logic is also to determine at least one provider logic to utilize to obtain the path record information for at least one subnet associated with the address resolution request. The provider interface logic is also to generate an address resolution response that includes a resolved address, that includes the path record information, and the identity of at least one local port to enable the at least one application to route data packets through the at least one determined subnet.

Another example network node element includes the forgoing and further includes application interface logic to receive the address resolution request message from the at least one application, generate an application resolution request to forward to the provider interface logic, and parse the address resolution response to obtain at least one resolved address response to the request from the at least one application.

Another example network node element includes the forgoing and further defines wherein the application is a kernel user of an operating system executed by the network node element, and further includes kernel user interface logic to receive the address resolution request message from the at least one application of a kernel user, generate an application resolution request to forward to the provider interface logic, and parse the address resolution response to obtain at least one resolved address response to the request from the at least one application.

Another example network node element includes the forgoing and further defines the provider logic is generated by a subnet manager and/or subnet administrator associated with the subnet, and wherein the provider logic to cache resolved address data including path record information associated with the subnet.

Another example network node element includes the forgoing and further defines the provider logic is generated by a subnet manager (SM) and/or subnet administrator (SA) associated with the subnet, and wherein the provider logic to communicate with the SA and/or SM, to obtain resolved address data including path record information associated with the subnet, upon receipt of the address resolution request from the at least one application.

Another example network node element includes the forgoing and further defines the partial address information is insufficient information to enable the at least one application to route one or more packets through the subnet.

Another example network node element includes the forgoing and further defines the path record information includes information that relates a source node to a destination node and fabric-specific information regarding one or more hops in a fabric of the determined subnet.

Another example network node element includes the forgoing and further defines the provider interface logic is also to initiate communications with the determined subnet to obtain a resolved address, if the provider logic does not have path record information response to the address resolution request.

Another example network node element includes the forgoing and further defines the provider logic is assigned to at least one local port.

The present disclosure also provides A network node element that includes means for providing path record information of an associated subnet in communication with the computer network node; and means for interfacing to receive an address resolution request from at least one application that includes partial address information, the means for interfacing to also determine at least one local port of the computer network node to enable packet routing associated with the address resolution request; the means for interfacing to also determine at least one subnet associated with the address resolution request; the means for interfacing to also determine at least one provider logic to utilize to obtain the path record information for at least one subnet associated with the address resolution request; the means for interfacing to also generate an address resolution response that includes a resolved address, that includes the path record information, and the identity of at least one local port to enable the at least one application to route data packets through the at least one determined subnet.

Another example network node element includes the forgoing and further defines the means for providing is generated by a subnet manager (SM) and/or subnet administrator (SA) associated with the subnet, and wherein the means for providing to communicate with the SA and/or SM, to obtain resolved address data including path record information associated with the subnet, upon receipt of the address resolution request from the at least one application.

The present disclosure also provides a method for resolving an address, the method includes determining, by a network node element, at least one local port of the network node element to enable packet routing associated with an address resolution request; determining, by the network node element, at least one subnet associated with the address resolution request; determining, by the network node element, path record information for at least one subnet associated with the address resolution request, wherein the path record information is locally stored and/or locally controlled by the network node element; and generating, by the network node element, an address resolution response that includes a resolved address, that includes the path record information, and the identity of at least one local port to enable at least one application to route data packets through the at least one determined subnet.

Another example method includes the forgoing and further defines the application is a user space application.

Another example method includes the forgoing and further defines the application is a kernel user of an operating system executed by the network node element.

Another example method includes the forgoing and further defines the path record information is generated by a subnet manager and/or subnet administrator associated with the subnet, and wherein the method further includes caching the resolved address data including path record information associated with the subnet.

Another example method includes the forgoing and further defines the path record information is generated by a subnet manager (SM) and/or subnet administrator (SA) associated with the subnet, and wherein the method further includes communicating with the SA and/or SM, and obtaining resolved address data including path record information associated with the subnet, upon receipt of the address resolution request.

Another example method includes the forgoing and further defines the partial address information is insufficient information to enable the at least one application to route one or more packets through the subnet.

Another example method includes the forgoing and further defines the path record information includes information that relates a source node to a destination node and fabric-specific information regarding one or more hops in a fabric of the determined subnet.

Another example method includes the forgoing and further includes initiating communications with the determined subnet to obtain a resolved address, if the path record information is not responsive to the address resolution request.

The present disclosure also provides a system that includes one or more storage devices having stored thereon, individually or in combination, instructions that when executed by one or more processors result in the following operations including: determine at least one local port of a network node element to enable packet routing associated with an address resolution request; determine at least one subnet associated with the address resolution request; determine path record information for at least one subnet associated with the address resolution request, wherein the path record information is locally stored and/or locally controlled; and generate an address resolution response that includes a resolved address, that includes the path record information, and the identity of at least one local port to enable at least one application to route data packets through the at least one determined subnet.

Another example system includes the forgoing and further defines the application is a user space application.

Another example system includes the forgoing and further defines the application is a kernel user of an operating system executed by the network node element.

Another example system includes the forgoing and further defines the path record information is generated by a subnet manager and/or subnet administrator associated with the subnet, and wherein the instructions that when executed by one or more processors results in the following additional operations including cache the resolved address data including path record information associated with the subnet.

Another example system includes the forgoing and further defines the path record information is generated by a subnet manager (SM) and/or subnet administrator (SA) associated with the subnet, and wherein the instructions that when executed by one or more processors results in the following additional operations including communicate with the SA and/or SM, and obtain resolved address data including path record information associated with the subnet, upon receipt of the address resolution request.

Another example system includes the forgoing and further defines the partial address information is insufficient information to enable the at least one application to route one or more packets through the subnet.

Another example system includes the forgoing and further defines the path record information includes information that relates a source node to a destination node and fabric-specific information regarding one or more hops in a fabric of the determined subnet.

Another example system includes the forgoing and further defines the instructions that when executed by one or more processors results in the following additional operations including initiate communications with the determined subnet to obtain a resolved address, if the path record information is not responsive to the address resolution request.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims.

## Claims

1. A network node element (102), adapted to be logically and/or physically partitioned into a user space region (104) and a kernel region (106) wherein the user space region includes at least one application (108A) comprising:
a network controller (122), the network controller including at least one local port to communicate with at least one subnet (124) using a switched fabric communications protocol, the at least one local port may be used by the at least one application (108A) and/or the at least one subnet (124) to provide physical coupling between the node (102) and the at least one subnet (124);
provider logic (116) including fabric specific path record information associated with the at least one subnet (124); and
provider interface logic (114) adapted to:
receive, from the at least one application (108) an address resolution request that includes source address information;
determine, based on the source address information of the address resolution request, the at least one subnet (124) and the at least one associated provider logic (116A) that includes the path record information that is responsive to the request from the application (108);
parse the path record information contained in the determined provider logic (116A) to generate a response to the requesting application (108A), where the response includes the path record information;
determine, based on the address resolution request, the network controller (122) and the at least one local port that may be used by the requesting application (108A) to communicate with the at least one subnet (124A-M); and
communicate an address resolution response to the at least one application (108A), the address resolution response including:
the determined path record information that is responsive to the request from the application (108), the determined network controller and the determined at least one local port; and
wherein the network node element (102) further comprises the kernel region (106), the kernel region comprising at least one kernel user (118) and a kernel user interface logic (120), wherein the at least one kernel user (118) is adapted to generate an address resolution request, similar to the address resolution request generated by the at least one application (108A) and received by the provider interface logic (114) wherein the kernel space (106) includes a kernel user interface logic (120) configured to receive said address resolution request from the at least one kernel user (118) and to format the request message to enable the provider interface logic (114) to communicate the address resolution response responsive to said address resolution request from the at least one kernel user (118) to the kernel user interface logic (120) which then is adapted to format the response into a format accessible by the at least one kernel user (118).

2. The network node element of claim 1, wherein the path record information of the provider logic is generated by at least one of: a subnet manager, SM, associated with the at least one subnet or a subnet administrator, SA, associated with the at least one subnet, and wherein the provider logic caches resolved address data including path record information associated with the at least one subnet.

3. The network node element of claim 2, wherein the provider logic is adapted to communicate with an in-band or out-of-band communication with the SA, to enable address resolution in the event that the address resolution request cannot be fulfilled locally by the provider logic.

4. The network node element of any one of claims 1 through 3, wherein the address resolution request generated by the application (108A) includes incomplete or inaccurate address information for a destination node.

5. The network node element of any one of claims 1 through 4, wherein the path record information includes information that relates a source network node element to a destination network node element and fabric-specific information regarding one or more hops in a fabric of the identified subnet.

6. A method (500) for resolving an address, the method comprising:
identifying, by a network node element (102) adapted to be logically and/or physically partitioned into a user space region (104) and a kernel region (106) wherein the user space region includes at least one application (108A), a local port coupled to a network controller (122) of the network node element (102), the local port to enable communication with at least one subnet (124) using a switched fabric communication protocol, the at least one local port may be used by the at least one application (108A) and/or the at least one subnet (124) to provide physical coupling between the node (102) and the at least one subnet (124);
identifying, by a provider logic (116) local to the network node element and within the user space region (104) of the local network node element, fabric specific path record information associated with the at least one subnet (124);
receiving (502), by provider interface logic (114) local to the network node element and within the user space region (104) of the local network node element, an address resolution request that includes source address information from the at least one application (108);
determining, based on the source address information of the address resolution request, the at least one subnet and the at least one associated provider logic (116A) that includes the path record information that is responsive to the request from the application (108);
parsing (504), by the provider interface logic, the path record information contained in the determined provider logic (116A) to generate a response to the requesting application (108A), where the response includes the path record information;
determining, based on the address resolution request, the network controller (122) and at least one local port that may be used by the requesting application (108A) to communicate with the at least one subnet (124A-M);
communicating, by the provider interface logic, an address resolution response to the at least one application (108A), the address resolution response including: the determined path record information that is responsive to the request from the application (108), the determined network controller and the determined at least one local port; and
generating, by at least one kernel user (118) of the kernel region (106), an address resolution request, similar to the address resolution request generated by the at least one application (108A) and received by the provider interface logic (114) wherein the kernel space (106) includes a kernel user interface logic (120) configured to receive said address resolution request from the at least one kernel user (118) and formatting the request message to enable the provider interface logic (114) to communicate the address resolution response responsive to said address resolution request from the at least one kernel user (118) to the kernel user interface logic (120) which then is adapted to format the response into a format accessible by the at least one kernel user (118) .

7. The method of claim 6, wherein the path record information of the provider logic is generated by at least one of: a subnet manager, SM, associated with the at least one subnet or a subnet administrator, SA, associated with the at least one subnet, and wherein the provider logic caches resolved address data including path record information associated with the at least one subnet, wherein the provider logic communicates with an in-band or out-of-band communication with the SA, to enable address resolution in the event that the address resolution request cannot be fulfilled locally by the provider logic.

8. The method of any one of claims 6 through 7, wherein the address resolution request generated by the application (108A) includes incomplete or inaccurate address information for a destination node.

9. The method of any one of claims 6 through 8, wherein the path record information includes information that relates the source network node to the destination network node and fabric-specific information regarding one or more hops in a fabric of the identified subnet.

10. At least one non-transitory computer-readable storage device having stored thereon instructions that when executed by one or more processors cause the performance of the method of any one of claims 6 through 9.

## Patentansprüche

1. Netzwerkknotenelement (102), das dafür eingerichtet ist, logisch und/oder physisch in einen Benutzerraumbereich (104) und einen Kernelbereich (106) partitioniert zu werden, wobei der Benutzerraumbereich mindestens eine Anwendung (108A) beinhaltet, umfassend:
einen Netzwerkcontroller (122), wobei der Netzwerkcontroller mindestens einen lokalen Port zum Kommunizieren mit mindestens einem Subnetz (124) unter Verwendung eines Switched-Fabric-Kommunikationsprotokolls beinhaltet, wobei der mindestens eine lokale Port durch die mindestens eine Anwendung (108A) und/oder das mindestens eine Subnetz (124) verwendet werden kann, um eine physische Kopplung zwischen dem Knoten (102) und dem mindestens einen Subnetz (124) bereitzustellen;
Anbieterlogik (116), die Fabric-spezifische Pfadaufzeichnungsinformationen beinhaltet, die mit dem mindestens einen Subnetz (124) assoziiert sind; und
Anbieterschnittstellenlogik (114), die eingerichtet ist zum:
Empfangen, von der mindestens einen Anwendung (108) einer Adressenauflösungsanfrage, die Quellenadresseninformationen beinhaltet;
Bestimmen, auf der Grundlage der Quellenadresseninformationen der Adressenauflösungsanfrage, des mindestens einen Subnetzes (124) und der mindestens einen assoziierten Anbieterlogik (116A), die die Pfadaufzeichnungsinformationen beinhaltet, die auf die Anfrage von der Anwendung (108) reagieren;
Parsen der in der bestimmten Anbieterlogik (116A) enthaltenen Pfadaufzeichnungsinformationen, um eine Antwort auf die anfragende Anwendung (108A) zu erzeugen, wobei die Antwort die Pfadaufzeichnungsinformationen beinhaltet;
Bestimmen, auf der Grundlage der Adressenauflösungsanfrage, des Netzwerkcontrollers (122) und des mindestens einen lokalen Ports, der durch die anfragende Anwendung (108A) zum Kommunizieren mit dem mindestens einen Subnetz (124A-M) verwendet werden kann; und
Kommunizieren einer Adressenauflösungsantwort an die mindestens eine Anwendung (108A), wobei die Adressenauflösungsantwort Folgendes beinhaltet:
die bestimmten Pfadaufzeichnungsinformationen, die auf die Anfrage von der Anwendung (108) reagieren, den bestimmten Netzwerkcontroller und den bestimmten mindestens einen lokalen Port; und
wobei das Netzwerkknotenelement (102) ferner den Kernelbereich (106) umfasst, wobei der Kernelbereich mindestens einen Kernelbenutzer (118) und eine Kernelbenutzer-Schnittstellenlogik (120) umfasst, wobei der mindestens eine Kernelbenutzer (118) eingerichtet ist zum Erzeugen einer Adressenauflösungsanfrage, ähnlich der Adressenauflösungsanfrage, die durch die mindestens eine Anwendung (108A) erzeugt und durch die Anbieterschnittstellenlogik (114) empfangen wurde, wobei der Kernelraum (106) eine Kernelbenutzer-Schnittstellenlogik (120) beinhaltet, die ausgelegt ist zum Empfangen der Adressenauflösungsanfrage von dem mindestens einen Kernelbenutzer (118) und zum Formatieren der Anfragenachricht, um die Anbieterschnittstellenlogik (114) zu befähigen, die Adressenauflösungsantwort, als Reaktion auf die Adressenauflösungsanfrage von dem mindestens einen Kernelbenutzer (118), an die Kernelbenutzer-Schnittstellenlogik (120) zu kommunizieren, die dann eingerichtet ist zum Formatieren der Antwort in ein Format, auf das der mindestens eine Kernelbenutzer (118) zugreifen kann.

2. Netzwerkknotenelement nach Anspruch 1, wobei die Pfadaufzeichnungsinformationen der Anbieterlogik erzeugt werden durch: einen Subnetz-Manager, SM, assoziiert mit dem mindestens einen Subnetz, und/oder einen Subnetz-Administrator, SA, assoziiert mit dem mindestens einen Subnetz, und wobei die Anbieterlogik aufgelöste Adressdaten zwischenspeichert, die Pfadaufzeichnungsinformationen, die mit dem mindestens einen Subnetz assoziiert sind, beinhalten.

3. Netzwerkknotenelement nach Anspruch 2, wobei die Anbieterlogik eingerichtet ist zum Kommunizieren mit einer In-Band- oder Außer-Band-Kommunikation mit dem SA, um Adressenauflösung für den Fall zu ermöglichen, dass die Adressenauflösungsanfrage nicht lokal durch die Anbieterlogik erfüllt werden kann.

4. Netzwerkknotenelement nach einem der Ansprüche 1 bis 3, wobei die durch die Anwendung (108A) erzeugte Adressenauflösungsanfrage unvollständige oder ungenaue Adresseninformationen für einen Bestimmungsknoten beinhaltet.

5. Netzwerkknotenelement nach einem der Ansprüche 1 bis 4, wobei die Pfadaufzeichnungsinformationen Informationen beinhalten, die ein Quellennetzwerkknotenelement zu einem Bestimmungsnetzwerkknotenelement und Fabric-spezifischen Informationen hinsichtlich eines oder mehrerer Hops in einem Fabric des identifizierten Subnetzes in Beziehung setzen.

6. Verfahren (500) zum Auflösen einer Adresse, wobei das Verfahren Folgendes umfasst:
Identifizieren, durch ein Netzwerkknotenelement (102), das dafür eingerichtet ist, logisch und/oder physisch in einen Benutzerraumbereich (104) und einen Kernelbereich (106) partitioniert zu werden, wobei der Benutzerraumbereich mindestens eine Anwendung (108A) beinhaltet, eines lokalen Ports, der mit einem Netzwerkcontroller (122) des Netzwerkknotenelements (102) gekoppelt ist, wobei der lokale Port Kommunikation mit mindestens einem Subnetz (124) unter Verwendung eines Switched-Fabric-Kommunikationsprotokolls ermöglichen soll, wobei der mindestens eine lokale Port durch die mindestens eine Anwendung (108A) und/oder das mindestens eine Subnetz (124) verwendet werden kann, um eine physische Kopplung zwischen dem Knoten (102) und dem mindestens einen Subnetz (124) bereitzustellen;
Identifizieren, durch eine Anbieterlogik (116), die zu dem Netzwerkknotenelement lokal ist und sich innerhalb des Benutzerraumbereichs (104) des lokalen Netzwerkknotenelements befindet, von Fabric-spezifischen Pfadaufzeichnungsinformationen, die mit dem mindestens einen Subnetz (124) assoziiert sind;
Empfangen (502), durch eine Anbieterschnittstellenlogik (114), die zu dem Netzwerkknotenelement lokal ist und sich innerhalb des Benutzerraumbereichs (104) des lokalen Netzwerkknotenelements befindet, einer Adressenauflösungsanfrage, die Quellenadresseninformationen von der mindestens einen Anwendung (108) beinhaltet;
Bestimmen, auf der Grundlage der Quellenadresseninformationen der Adressenauflösungsanfrage, des mindestens einen Subnetzes und der mindestens einen assoziierten Anbieterlogik (116A), die die Pfadaufzeichnungsinformationen beinhaltet, die auf die Anfrage von der Anwendung (108) reagieren;
Parsen (504), durch die Anbieterschnittstellenlogik, der in der bestimmten Anbieterlogik (116A) enthaltenen Pfadaufzeichnungsinformationen, um eine Antwort auf die anfragende Anwendung (108A) zu erzeugen, wobei die Antwort die Pfadaufzeichnungsinformationen beinhaltet;
Bestimmen, auf der Grundlage der Adressenauflösungsanfrage, des Netzwerkcontrollers (122) und des mindestens einen lokalen Ports, der durch die anfragende Anwendung (108A) zum Kommunizieren mit dem mindestens einen Subnetz (124A-M) verwendet werden kann;
Kommunizieren, durch die Anbieterschnittstellenlogik, einer Adressenauflösungsantwort an die mindestens eine Anwendung (108A), wobei die Adressenauflösungsantwort Folgendes beinhaltet: die bestimmten Pfadaufzeichnungsinformationen, die auf die Anfrage von der Anwendung (108) reagieren, den bestimmten Netzwerkcontroller und den bestimmten mindestens einen lokalen Port; und
Erzeugen, durch mindestens einen Kernelbenutzer (118) des Kernelbereichs (106), einer Adressenauflösungsanfrage, ähnlich der Adressenauflösungsanfrage, die durch die mindestens eine Anwendung (108A) erzeugt und durch die Anbieterschnittstellenlogik (114) empfangen wurde, wobei der Kernelraum (106) eine Kernelbenutzer-Schnittstellenlogik (120) beinhaltet, die ausgelegt ist zum Empfangen der Adressenauflösungsanfrage von dem mindestens einen Kernelbenutzer (118) und zum Formatieren der Anfragenachricht, um die Anbieterschnittstellenlogik (114) zu befähigen, die Adressenauflösungsantwort, als Reaktion auf die Adressenauflösungsanfrage von dem mindestens einen Kernelbenutzer (118), an die Kernelbenutzer-Schnittstellenlogik (120) zu kommunizieren, die dann eingerichtet ist zum Formatieren der Antwort in ein Format, auf das der mindestens eine Kernelbenutzer (118) zugreifen kann.

7. Verfahren nach Anspruch 6, wobei die Pfadaufzeichnungsinformationen der Anbieterlogik erzeugt werden durch: einen Subnetz-Manager, SM, assoziiert mit dem mindestens einen Subnetz, und/oder einen Subnetz-Administrator, SA, assoziiert mit dem mindestens einen Subnetz, und wobei die Anbieterlogik aufgelöste Adressdaten zwischenspeichert, die Pfadaufzeichnungsinformationen, die mit dem mindestens einen Subnetz assoziiert sind, beinhalten, wobei die Anbieterlogik mit einer In-Band- oder Außer-Band-Kommunikation mit dem SA kommuniziert, um Adressenauflösung für den Fall zu ermöglichen, dass die Adressenauflösungsanfrage nicht lokal durch die Anbieterlogik erfüllt werden kann.

8. Verfahren nach einem der Ansprüche 6 bis 7, wobei die durch die Anwendung (108A) erzeugte Adressenauflösungsanfrage unvollständige oder ungenaue Adresseninformationen für einen Bestimmungsknoten beinhaltet.

9. Verfahren nach einem der Ansprüche 6 bis 8, wobei die Pfadaufzeichnungsinformationen Informationen beinhalten, die den Quellennetzwerkknoten zu dem Bestimmungsnetzwerkknoten und Fabric-spezifischen Informationen hinsichtlich eines oder mehrerer Hops in einem Fabric des identifizierten Subnetzes in Beziehung setzen.

10. Nichtvergängliche computerlesbare Speicherungsvorrichtung bzw. mehrere nichtvergängliche computerlesbare Speicherungsvorrichtungen, die darauf gespeicherte Anweisungen aufweisen, die bei Ausführung durch einen oder mehrere Prozessoren das Durchführen des Verfahrens nach einem der Ansprüche 6 bis 9 bewirken.

## Revendications

1. Élément de nœud de réseau (102), adapté pour être partitionné logiquement et/ou physiquement dans une région spatiale d'utilisateur (104) et une région de noyau (106), dans lequel la région spatiale d'utilisateur inclut au moins une application (108A) comprenant :
un contrôleur de réseau (122), le contrôleur de réseau incluant au moins un port local pour communiquer avec au moins un sous-réseau (124) en utilisant un protocole de communication à matrice commutée, l'au moins un port local peut être utilisé par l'au moins une application (108A) et/ou l'au moins un sous-réseau (124) pour fournir un couplage physique entre le nœud (102) et l'au moins un sous-réseau (124) ;
une logique de fournisseur (116) incluant des informations d'enregistrement de trajet spécifiques de matrice associées à l'au moins un sous-réseau (124) ; et
une logique d'interface de fournisseur (114) adaptée pour :
recevoir, à partir de l'au moins une application (108), une demande de résolution d'adresse qui inclut des informations d'adresse source ;
déterminer, sur la base des informations d'adresse source de la demande de résolution d'adresse, l'au moins un sous-réseau (124) et l'au moins une logique de fournisseur associée (116A) qui inclut les informations d'enregistrement du trajet qui répondent à la demande provenant de l'application (108) ;
analyser les informations d'enregistrement de trajet contenues dans la logique de fournisseur déterminée (116A) pour générer une réponse à l'application demandeuse (108A), où la réponse inclut les informations d'enregistrement de trajet ;
déterminer, sur la base de la demande de résolution d'adresse, le contrôleur de réseau (122) et l'au moins un port local qui peuvent être utilisés par l'application demandeuse (108A) pour communiquer avec l'au moins un sous-réseau (124A-M) ; et
communiquer une réponse de résolution d'adresse à l'au moins une application (108A), la réponse de résolution d'adresse incluant :
les informations d'enregistrement de trajet déterminées qui répondent à la demande provenant de l'application (108), le contrôleur de réseau déterminé et l'au moins un port local déterminé ; et
dans lequel l'élément de nœud de réseau (102) comprend en outre la région de noyau (106), la région de noyau comprenant au moins un utilisateur de noyau (118) et une logique d'interface d'utilisateur de noyau (120), dans lequel l'au moins un utilisateur de noyau (118) est adapté pour générer une demande de résolution d'adresse, similaire à la demande de résolution d'adresse générée par l'au moins une application (108A) et reçue par la logique d'interface de fournisseur (114), dans lequel l'espace de noyau (106) inclut une logique d'interface d'utilisateur de noyau (120) configurée pour recevoir ladite demande de résolution d'adresse provenant de l'au moins un utilisateur de noyau (118) et pour formater le message de demande afin de permettre à la logique d'interface de fournisseur (114) de communiquer la réponse de résolution d'adresse en réponse à ladite demande de résolution d'adresse provenant de l'au moins un utilisateur de noyau (118) à la logique d'interface d'utilisateur de noyau (120) qui est ensuite adaptée pour formater la réponse en un format accessible par l'au moins un utilisateur de noyau (118).

2. Élément de nœud de réseau selon la revendication 1, dans lequel les informations d'enregistrement de trajet de la logique de fournisseur sont générées par au moins un élément parmi : un gestionnaire de sous-réseau, SM, associé à l'au moins un sous-réseau ou à un administrateur de sous-réseau, SA, associé à l'au moins un sous-réseau, et dans lequel la logique de fournisseur met en cache des données d'adresse résolues incluant des informations d'enregistrement de trajet associées à l'au moins un sous-réseau.

3. Élément de nœud de réseau selon la revendication 2, dans lequel la logique de fournisseur est adaptée pour communiquer avec une communication en bande ou hors bande avec le SA, afin de permettre une résolution d'adresse au cas où la demande de résolution d'adresse ne peut pas être remplie localement par la logique de fournisseur.

4. Élément de nœud de réseau selon l'une quelconque des revendications 1 à 3, dans lequel la demande de résolution d'adresse générée par l'application (108A) inclut des informations d'adresse incomplètes ou inexactes pour un nœud de destination.

5. Élément de nœud de réseau selon l'une quelconque des revendications 1 à 4, dans lequel les informations d'enregistrement de trajet incluent des informations qui concernent un élément de nœud de réseau source vers un élément de nœud de réseau de destination et des informations spécifiques à la matrice concernant un ou plusieurs bonds dans une matrice du sous-réseau identifié.

6. Procédé (500) permettant de résoudre une adresse, le procédé comprenant :
l'identification, par un élément de nœud de réseau (102) adapté pour être partitionné logiquement et/ou physiquement dans une région spatiale d'utilisateur (104) et une région de noyau (106), dans lequel la région spatiale d'utilisateur inclut au moins une application (108A), un port local couplé à un contrôleur de réseau (122) de l'élément de nœud de réseau (102), le port local permettant une communication avec au moins un sous-réseau (124) en utilisant un protocole de communication à matrice commutée, l'au moins un port local peut être utilisé par l'au moins une application (108A) et/ou l'au moins un sous-réseau (124) pour fournir un couplage physique entre le nœud (102) et l'au moins un sous-réseau (124) ;
l'identification, par une logique de fournisseur (116) locale à l'élément de nœud de réseau et à l'intérieur de la région spatiale d'utilisateur (104) de l'élément de nœud de réseau local, d'informations d'enregistrement de trajet spécifiques de matrice associées à l'au moins un sous-réseau (124) ;
la réception (502), par une logique d'interface de fournisseur (114) locale à l'élément de nœud de réseau et à l'intérieur de la région spatiale d'utilisateur (104) de l'élément de nœud de réseau local, d'une demande de résolution d'adresse qui inclut des informations d'adresse source provenant de l'au moins une application (108) ;
la détermination, sur la base des informations d'adresse source de la demande de résolution d'adresse, de l'au moins un sous-réseau et de l'au moins une logique de fournisseur associée (116A) qui inclut les informations d'enregistrement du trajet qui répondent à la demande provenant de l'application (108) ;
l'analyse (504), par la logique d'interface de fournisseur, des informations d'enregistrement de trajet contenues dans la logique de fournisseur déterminée (116A) pour générer une réponse à l'application demandeuse (108A), où la réponse inclut les informations d'enregistrement de trajet ;
la détermination, sur la base de la demande de résolution d'adresse, du contrôleur de réseau (122) et d'au moins un port local qui peuvent être utilisés par l'application demandeuse (108A) pour communiquer avec l'au moins un sous-réseau (124A-M) ;
la communication, par la logique d'interface de fournisseur, d'une réponse de résolution d'adresse à l'au moins une application (108A), la réponse de résolution d'adresse incluant : les informations d'enregistrement de trajet déterminées qui répondent à la demande provenant de l'application (108), le contrôleur de réseau déterminé et l'au moins un port local déterminé ; et
la génération, par au moins un utilisateur de noyau (118) de la région de noyau (106), d'une demande de résolution d'adresse, similaire à la demande de résolution d'adresse générée par l'au moins une application (108A) et reçue par la logique d'interface de fournisseur (114), dans lequel l'espace de noyau (106) inclut une logique d'interface d'utilisateur de noyau (120) configurée pour recevoir ladite demande de résolution d'adresse provenant de l'au moins un utilisateur de noyau (118) et pour formater le message de demande afin de permettre à la logique d'interface de fournisseur (114) de communiquer la réponse de résolution d'adresse en réponse à ladite demande de résolution d'adresse provenant de l'au moins un utilisateur de noyau (118) à la logique d'interface d'utilisateur de noyau (120) qui est ensuite adaptée pour formater la réponse en un format accessible par l'au moins un utilisateur de noyau (118).

7. Procédé selon la revendication 6, dans lequel les informations d'enregistrement de trajet de la logique de fournisseur sont générées par au moins un élément parmi : un gestionnaire de sous-réseau, SM, associé à l'au moins un sous-réseau ou à un administrateur de sous-réseau, SA, associé à l'au moins un sous-réseau, et dans lequel la logique de fournisseur met en cache des données d'adresse résolues incluant des informations d'enregistrement de trajet associées à l'au moins un sous-réseau, dans lequel la logique de fournisseur communique avec une communication en bande ou hors bande avec le SA, pour permettre une résolution d'adresse au cas où la demande de résolution d'adresse ne peut pas être remplie localement par la logique de fournisseur.

8. Procédé selon l'une quelconque des revendications 6 à 7, dans lequel la demande de résolution d'adresse générée par l'application (108A) inclut des informations d'adresse incomplètes ou inexactes pour un nœud de destination.

9. Procédé selon l'une quelconque des revendications 6 à 8, dans lequel les informations d'enregistrement de trajet incluent des informations qui concernent le nœud de réseau source vers le nœud de réseau de destination et des informations spécifiques à la matrice concernant un ou plusieurs bonds dans une matrice du sous-réseau identifié.

10. Au moins un dispositif de stockage lisible par ordinateur non transitoire sur lequel sont stockées des instructions qui, lorsqu'elles sont exécutées par un ou plusieurs processeurs, entraînent la performance du procédé l'une quelconque des revendications 6 à 9.
